Europäisches Patentamt

European Patent Office

Office européen des brevets

(19)

(11) **EP 1 411 430 A2**

(12) **EUROPEAN PATENT APPLICATION**

(43) Date of publication:
**21.04.2004 Bulletin 2004/17**

(51) Int Cl.⁷: **G06F 9/46**

(21) Application number: **03254782.0**

(22) Date of filing: **31.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.10.2002 GB 0223853**

(71) Applicant: **Kabushiki Kaisha Toshiba Tokyo 105-8001 (JP)**

(72) Inventor: **Kalogridis, Georgios**
**C/O Toshiba Research Europe**
**Bristol BS1 4ND (GB)**

(74) Representative: **Midgley, Jonathan Lee**
**Marks & Clerk**
**57-60 Lincoln's Inn Fields**
**GB-London WC2A 3LS (GB)**

(54) **Method and system for flexible delegation in a computer system**

(57) This invention generally relates to methods, systems and computer program code for flexible but secure delegation, particularly where a chain of accountability is required in a system where trust is delegated.

A method of delegation is described, for delegating from a first data processing entity to a second data processing entity, said first and second entities having a bidirectional communication link with one another. The method comprises sending a delegation token from said first entity to said second entity, said delegation token including information relating to a delegation request; receiving a reply from said second entity at said first entity, said reply including information for determining acceptance of delegation represented by said delegation token by said second entity; and sending a signature from said first entity to said second entity responsive to said reply, said signature comprising a signature of at least said delegation token.

Figure 2

EP 1 411 430 A2

**Description**

This invention generally relates to methods, systems and computer program code for flexible but secure delegation. The invention is useful where a chain of accountability is required in a system where trust is delegated.

It is helpful in understanding the background and context for the invention to briefly discuss some examples of delegation. Broadly speaking delegation refers to delegation of authority from one data processing system or object to a second so that the second system or object can perform a task on behalf of the first. The delegated authority is generally passed in the form of a delegation token which may comprise data or a message, for example to allow some other program to perform an action, or additionally or alternatively the delegation token may itself comprise a program (that is, a so-called mobile agent MA) intended to run in another portion of a distributed system or on another machine. Thus, in effect, a delegation token comprises a set of data and/or instructions generally defined by a user of the token.

To take an M-commerce example a delegation token may comprise a program to enable a specific computer game to be purchased additionally or alternatively with, for example, some constraints such as a list of vendors the software might be purchased from, delivery deadline and/or price constraints and, where a range of models or versions is available, data specifying acceptable models or versions. Normally the delegation token will also include an expiry deadline to determine when authorisation to purchase the game is to expire. In one scenario authority in the form of such a delegation token may be delegated from a user's mobile terminal (MT) such as a mobile phone handset to a program, in this case known as a "static" agent resident on the terminal user's home pc. In this scenario the delegation token includes a message to the home specifying the constraints on the purchase that there is no need for the token to include the purchase program itself.

In another scenario the delegation token includes the software purchase program, which operates as a mobile agent, and this program (the token) is passed to the home PC where it executes remotely to purchase the computer game. In the case of a mobile terminal, the mobile terminal may create this program or it may download it, for example from a trusted server, say from the handset manufacturer or network operator. The program has no need for a static platform and can be hosted in a variety of machines which, when provided if appropriate information demonstrating that the programme can be trusted, allow the program to execute. Thus the delegation token may comprise a program for executing on a remote machine. In the scenario discussed a service (the purchased computer game software) may be provided either to the terminal or to the home pc (the delegation token may include delivery information). Also, in this scenario the user may decide that the home pc should always trust delegation token (mobile agents) from the user's own mobile terminal, but it will be appreciated that in other scenarios a high degree of confidence may be required before allowing a mobile agent to execute.

Generally delegation-based techniques facilitate access to software tickets, coupons and other data such as streamed media data, for example music and MPEG movie clips.

In another example the mobile terminal may have a requirement for additional memory storage space, say to save documents. Distributed file storage may be available via local servers and the mobile terminal may therefore address the requirement by creating a delegation token to level resources in the distributed environment for example by temporarily moving files which are not being used to server-based storage. The delegation token may comprise a request to save files to the server-based storage, together with cost constraints, security requirements and an access policy for the files. Alternatively the delegation token may comprise a mobile agent in which the authority to store some types of data or files is delegated. In either case the delegation token is passed to a server which can choose whether or not to accept it. However if the server does accept the delegation token accountability should also be passed to the server for managing the data to be stored and, preferably, there should be some means of proving that the server has accepted the delegation token. Sometimes the server may not be able to meet the request itself but may pass on the (or another) request to another server, thereby creating a chain of delegation.

To take a third example, there may be a need or desire to upgrade software such as operating systems software in the mobile terminal. In this case the delegation token may comprise a request to a server to provide the necessary software, the delegation token including any necessary details of the mobile terminal and requesting delivery of the new code to the terminal. However this scenario is relatively straightforward compared with those previously discussed and unless, for example a chain of delegation is necessary more conventional secure download techniques may be preferable to delegation-based techniques.

It will be appreciated that delegation-based techniques are potentially very powerful but that because of this security and accountability is important. For example where a malicious hacker able to substitute their own software in place of a mobile agent of a delegation token there could be significant financial and data security implications.

In the following description reference will primarily be made to mobile devices and wireless networks but the skilled person will appreciate that the techniques to be described are not limited to such systems and may be employed, for example, in wired computer networks and, more generally, in distributed or object-oriented computing systems.

The operation of some examples of wireless networks will now be reviewed, together with some cryptographic techniques.

A personal area network (PAN) may include a number of mobile devices which need to exchange information with each other and with their users. Technologies such as cellular radio, Bluetooth (Trade Mark) (Bluetooth Special Interest Group (SIG), http://www.bluetooth.com/), IrDA (Infrared Data Association (IrDA), http://www.irda.org/) and WLAN (for example Wireless Local Area Network IEEE Standard 802.11, "1999 Edition ISO/IEC 8802-5-1998, Standards for Local and Metropolitan Area Networks — Wireless LAN Medium Access Control (MAC) and Physical Layer (PHY) specifications," 1999) may be employed. Secure data transfer is needed for properties such as confidentiality, integrity, authentication, and non-repudiation of data.

There is often a limited amount of trust between mobile terminals such as Pocket PCs, mobile phones and laptops in a PAN (Personal Area Network) environment and there is a need for protocols for secure mobile delegation for reconfigurable mobile terminals operating in a Personal Area Network (PAN) context. In a PAN environment a device may need to reconfigure, for example, to connect to an alternative network and/or to receive application services via other mobile terminals with different network providers. The ability of a device to reconfigure raises a number of security issues that need to be addressed in order to realize the potential of the reconfigurable domain. A highly distributed environment suggests the requirement for security delegation techniques. Additionally, threats increase from malicious software such as viruses, Trojan horses and worms. One can potentially employ secure mobile delegation for securing software modifications/upgrades in reconfigurable terminals, from high level applications and system software (including ring tones) down to lower-layer baseband modules.

The concept of a personal area network (PAN) contemplates local (i.e. personal) communication between devices using technologies such as IrDA, Bluetooth and/or WLAN technologies (e.g. IEEE 802.11). Some PANs may include a component administrator to provide policing of authorization authority. Terminals of a PAN are generally categorized into two classes, smart terminals (such as a PDA, smart phone, laptop or car) which may control and configure the PAN, and dumb terminals (such as printers, scanners, storage media, and user interface devices) which generally only provide one function and connect to smart terminals. A dumb terminal may communicate with a smart terminal, for example to evaluate a request for a delegation token, the smart terminal returning a result of such evaluation. The two classes of terminal are expected to support a unified configuration and access control interface both at the per device level and at the PAN level. For dumb terminals this is in addition to their specialized functionality and can include key management capability, software upgrade capability and service advertisement. Some dumb terminals may also be able to perform service discovery and may even be able to require services from other devices unassisted.

Two security considerations when downloading software are, firstly protecting the origin and integrity of the software against any accidental or deliberate corruption, and secondly providing an authorization system which enables, for example an SDR, to make an automatic decision as to whether or not to accept downloaded software and, by implication, to use it to reconfigure the SDR. The addition of a digital signature in PKI to a piece of code can be used by the code's recipient to verify its correctness and origin. As described above, the public key necessary to verify the signature may be obtained from a public key certificate either sent with the signed code or retrieved from a repository by the code's recipient. Once the code has been verified the SDR can decide whether or not to accept the code based on one or more of the identity of the certificate authority, policy identifiers in the certificate(s) which were verified in order to obtain the code signers public key, one or more policy statement built into the device by the manufacturer together with any policy statements input by the device's owner and/or user, and any information associated directly with the code, such as details of the intended scope of use of the code.

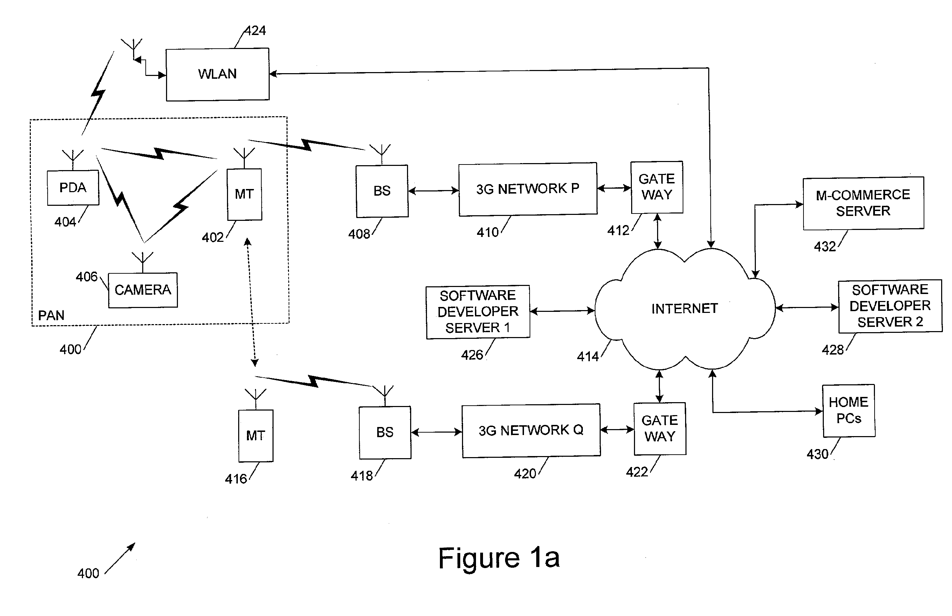

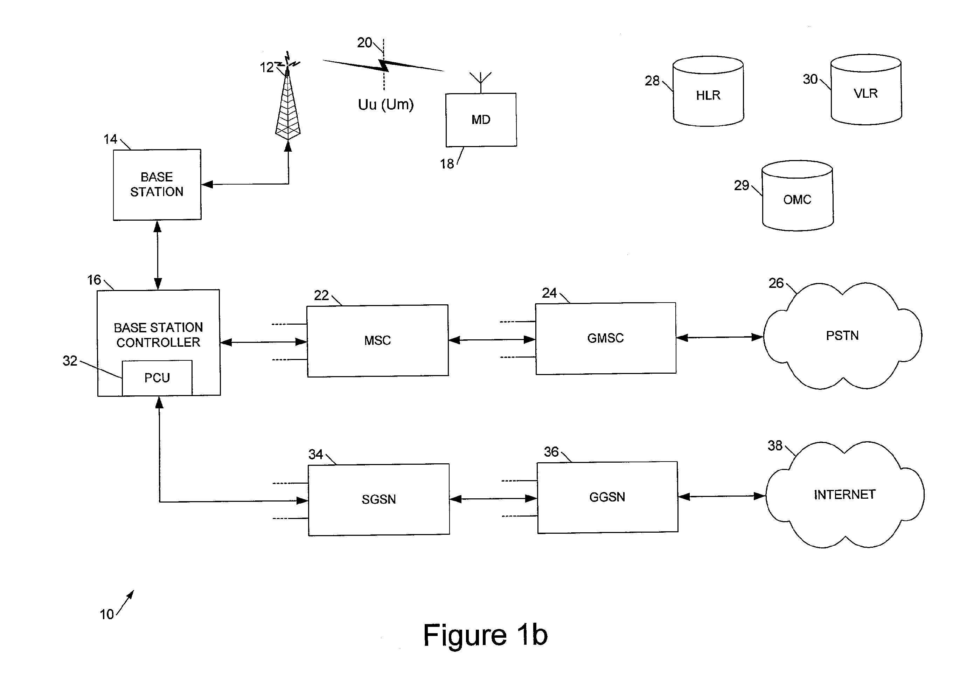

Figure 1 a shows an example of a PAN and associated network infrastructure. A PAN 100 in the illustrated example comprises a mobile terminal 102, a PDA 104 and a camera 106 in wireless (rf) communication with one another. Mobile terminal 102 is also in communication with a base station 108 of a first 3G mobile phone network 110 which has a gateway 112 to Internet 114. A second mobile terminal 116 carried by a second user is in communication with a second base station 118 of a second 3G mobile phone network 120 with a second gateway 122 to Internet 114. PDA 104 is also in communication with a WLAN 124, such as an IEEE 802.11 WLAN, which is also coupled to Internet 114. As will be appreciated many other systems may be coupled to the Internet, as illustrated first and second third party software developer servers 126, 128, home PCs 130, and one or more m-commerce servers 132. Mobile terminals 102 and 116 may also have a direct line of communication with one another, as illustrated by dashed line 134, for example via a Bluetooth link.

In a simple example of the use of delegation in the context of a user of mobile terminal 102 may wish to upgrade their terminal software, by downloading new software from the manufacturer of the terminal. To achieve this mobile terminal 102 may pass a delegation token (DT) to a service provider or network operator of phone network 110, which in turn passes the delegation token to the manufacturer, the manufacturer then delegating the task of performing the software upgrade to the service provider or network operator. In another example the user of mobile terminal 102 wants to acquire a clip of a new movie (or some other software) but the associated network 110 does not provide this service. However network 120, run by a different operator, does provide this service and the user is therefore able to obtain the movie clip from the user of mobile terminal 116 who, if necessary, first obtains it from network 120.

It is useful next to review general cryptographic techniques.

Broadly speaking at present two basic cryptographic techniques, symmetric and asymmetric, are employed, to provide secure data transmission for example for software download. Symmetric cryptography uses a common secret key for both encryption and decryption, along traditional lines. The data is protected by restricting access to this secret key and by key management techniques, for example, using a different key for each transmission or for a small group of data transmissions. A well-known example of symmetric cryptography is the US Data Encryption Standard (DES) algorithm (FIPS-46, FIPS-47-1, FIPS-74, FIPS-81 of the US National Bureau Standards). A variant of this is triple DES (3DES) in which three keys are used in succession to provide additional security. Other examples of symmetric cryptographic algorithms are RC4 from RSA Data Security, Inc and the International Data Encryption Algorithm (IDEA).

Asymmetric or so-called public key cryptography uses a pair of keys one "private" and one "public" (although in practice distribution of the public key is also often restricted). A message encrypted with the public key can only be decrypted with the private key, and vice-versa. An individual can thus encrypt data using the private key for decryption by any one with the corresponding public key and, similarly, anyone with the public key can securely send data to the individual by encrypting it with the public key safe in the knowledge that only the private key can be used to decrypt the data.

Asymmetric cryptographic systems are generally used within an infrastructure known as Public Key Infrastructure (PKI) which provides key management functions. Asymmetric cryptography can also be used to digitally sign messages by encrypting either the message or a message digest, using the private key. Providing the recipient has the original message they can compute the same digest and thus authenticate the signature by decrypting the message digest using the corresponding public key obtained, for example, from a digital certificate (see below). A message digest is derived from the original message and is generally shorter than the original message making it difficult to compute the original message from the digest; a so-called hash function (h) may be used to generate a message digest. Examples of one-way collision-resistant resistant (hard to guess) hash functions are given in R. Rivest, "The MD4 message-digest algorithm," Internet Request for Comments 1320, April 1992, and R. Rivest, "The MD5 message-digest algorithm," Internet Request for Comments 1321, April 1992.

An equivalent to a digital signature exists in symmetric cryptography, a so-called MAC (Message Authentication Code), which is computed using a shared secret key. Examples of MACs can be found in ISO 8731-1, "Banking - Approved algorithms for message authentication - Part 1:DEA", International Organisation for Standardization, Geneva, Switzerland, 1987. Another example of a MAC is a keyed hash function as described, for example, in Computer Data Authentication, National Bureau of Standards FIPS Publication 113, 1985. A MAC can check the integrity of a received software module, for example by comparing hash values of the received software module and one contained in an associated installation ticket. However this technique does not guarantee non-repudiation in the event of any dispute between the trusted provider and a terminal user, since the secret key is shared.

A Public Key Infrastructure normally includes provision for digital identity Certificates. To prevent an individual posing as somebody else an individual may prove his identity to a certification authority which then issues a certificate signed using the authority's private key and including the public key of the individual. The Certification Authority's (CA's) public key is widely known and therefore trusted and since the certificate could only have been encrypted using the authority's private key, the public key of the individual is verified by the certificate. Within the context of a mobile phone network a user or the network operator can authenticate their identity by signing a message with their private key; likewise a public key can be used to verify an identity. Further details of PKI for wireless applications can be found in WPKI, WAP-217-WPKI, version 24 -April 2001 available at www.wapforum.org and in the X.509 specifications (PKIX) which can be found at www.ietf.org, all hereby incorporated by reference.

In embodiments of the invention to be described later it is assumed that PKI (Public Key Infrastructure) is employed. In such an environment trusted parties such as manufacturers and operators typically issue their certificates to mobile terminals which store them in secure tamper resistance modules such as smart or other cards ( for example, a SIM: Subscriber Identity Module, WIM: Wireless Identity Module, SWIM: Combined SIM and WIM, USIM: Universal Subscriber Identity Module). More generally public keys may be stored in the terminal at manufacture, or on a SIM card, or they may be downloaded. For example a mobile terminal may access a read-only directory of a network operator to download public keys or certificates for other mobile terminals.

PKI provides non-repudiation and protects both parties; by contrast a symmetric session key provides a low overhead and fast download (for example, once it has been transported, say using the a certified public key, from another trusted party). Such a session key may be valid for only a short period for increased security. Techniques for secure software download using asymmetric cryptographic techniques to establish a communications link using symmetric cryptography are described in C. Yeun and T. Farnham, "Secure Software Download for Programmable Mobile User Equipment", IEE 3G Mobile Communication Technologies conference, 8-10 May 2002, and also in the applicant's co-pending UK patent applications, numbers 0201048.6 and 0201049.4 both filedAsymmetric cryptography was first publicly disclosed by Diffie and Hellman in 1976 (W. Diffie and D.E. Hellman, "New directions in cryptography", IEEE Transactions on Information Theory, 22 (1976), 644-654) and a number of asymmetric cryptographic techniques are now in the public domain of which the best known is the RSA (Rivest, Shamir and Adleman) algorithm (R.L. Rivest, A. Shamir and L.M. Adleman, "A method for obtaining digital signatures and public-key cryptosystems", Communications of the ACM, 21 (1978), 120-126). Other more recent algorithms including elliptic curve crypto systems (see, for example, X9.63, "Public key cryptography for the financial services industry: Key agreement and key transport using elliptic curve cryptography", Draft ANSI X9F1, October (1999)). The X.509 ITU (International Telecommunications Union) standard is commonly used for public key certificates. In this a certificate comprising a unique identifier for a key issuer, together with the public key (and normally information about the algorithm and certification authority) is included a directory, that is a public repository of certificates for use by individuals and organisations.

The symmetric and asymmetric cryptographic techniques outlined above each have advantages and disadvantages. Asymmetric approaches are less resource-efficient, requiring complex calculations and relatively longer key lengths than symmetric approaches to achieve a corresponding level of security. A symmetric approach, however, requires storage of secret keys within the terminal and does not provide non-repudiation (proving the sending or reception of data).

Data transmission is also important within mobile phone networks such as 2.5G and 3G (Third Generation) networks as described, for example, in the standards produced by the Third Generation Partnership Project (3GPP, 3GPP2), technical specifications for which can be found at www.3gpp.org, and which are hereby incorporated by reference.

Figure 1b shows a generic structure of a third generation digital mobile phone system at 10. In Figure 1 a radio mast 12 is coupled to a base station 14 which in turn is controlled by a base station controller 16. A mobile communications device 18 is shown in two-way communication with base station 14 across a radio or air interface 20, known as a Um interface in GSM (Global Systems for Mobile Communications) networks and GPRS (General Packet Radio Service) networks and a Uu interface in CDMA2000 and W-CDMA networks. Typically at any one time a plurality of mobile devices 18 are attached to a given base station, which includes a plurality of radio transceivers to serve these devices.

Base station controller 16 is coupled, together with a plurality of other base station controllers (not shown) to a mobile switching centre (MSC) 22. A plurality of such MSCs are in turn coupled to a gateway MSC (GMSC) 24 which connects the mobile phone network to the public switched telephone network (PSTN) 26. A home location register (HLR) 28 and a visitor location register (VLR) 30 manage call routing and roaming and other systems (not shown) manage authentication, billing. An operation and maintenance centre (OMC) 29 collects the statistics from network infrastructure elements such as base stations and switches to provide network operators with a high level view of the network's performance. The OMC can be used, for example, to determine how much of the available capacity of the network or parts of the network is being used at different times of day.

The above described network infrastructure essentially manages circuit switched voice connections between a mobile communications device 18 and other mobile devices and/or PSTN 26. So-called 2.5G networks such as GPRS, and 3G networks, add packet data services to the circuit switched voice services. In broad terms a packet control unit (PCU) 32 is added to the base station controller 16 and this is connected to a packet data network such as Internet 38 by means of a hierarchical series of switches. In a GSM-based network these comprise a serving GPRS support node (SGSN) 34 and a gateway GPRS support node (GGSM) 36. It will be appreciated that both in the system of Figure 1 and in the system described later the functionalities of elements within the network may reside on a single physical node or on separate physical nodes of the system.

Communications between the mobile device 18 and the network infrastructure generally include both data and control signals. The data may comprise digitally encoded voice data or a data modem may be employed to transparently communicate data to and from the mobile device. In a GSM-type network text and other low-bandwidth data may also be sent using the GSM Short Message Service (SMS).

In a 2.5G or 3G network mobile device 18 may provide more than a simple voice connection to another phone. For example mobile device 18 may additionally or alternatively provide access to video and/or multimedia data services, web browsing, e-mail and other data services. Logically mobile device 18 may be considered to comprise a mobile terminal (incorporating a subscriber identity module (SIM) card) with a serial connection to terminal equipment such as a data processor or personal computer. Generally once the mobile device has attached to the network it is "always on" and user data can be transferred transparently between the device and an external data network, for example by means of standard AT commands at the mobile terminal-terminal equipment interface. Where a conventional mobile phone is employed for mobile device 18 a terminal adapter, such as a GSM data card, may be needed.

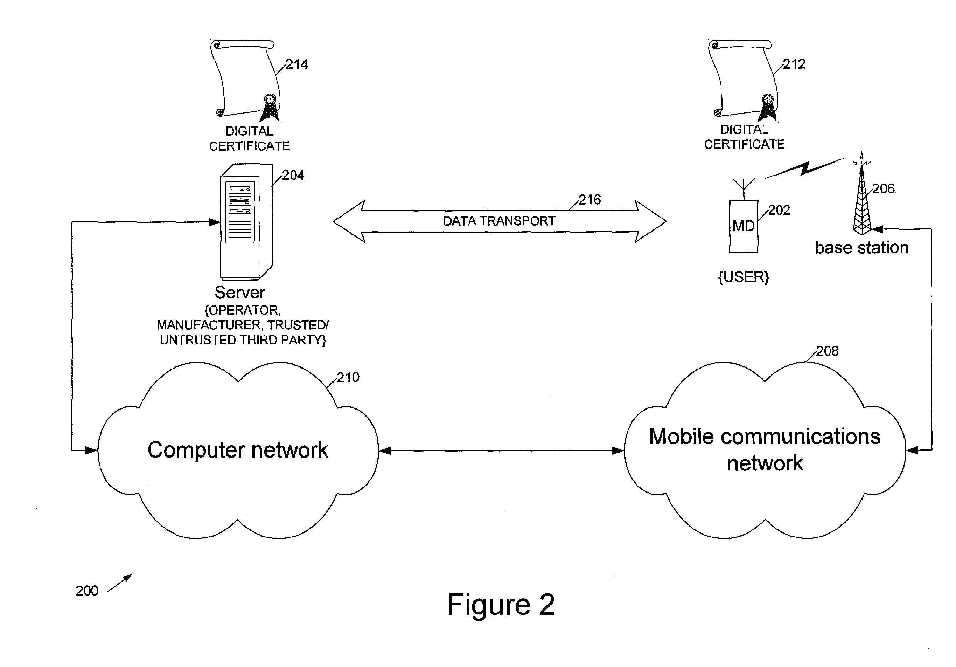

Figure 2 schematically illustrates a model 200 of a basic secure mobile communications system. A mobile device or terminal 202 is coupled to a mobile communications network 208, such as a mobile phone network or WLAN, via a fixed or base station 206. The mobile communications network 208 is in turn coupled to a computer network 210, such as the Internet, to which is attached a server 204. One or both of mobile device 202 and server 204 stores a digital certificate, digital certificate 212 stored in mobile device 202 including a public key for server 204 and digital certificate 214 stored in server 204 including a public key for the mobile device 202 (in other arrangements these may be downloaded as needed). The server may be operated, for example, by a network operator, mobile device manufacturer, or by a third party. The mobile device is typically operated by a user and, for simplicity, only a single mobile device is shown although in general there is a plurality of such devices. A communication mechanism 216 is provided to transport data between the mobile device 202 and the server 204, but typically such data travels via a plurality of intermediaries (not shown in Figure 2).

In the context of 3G mobile phone systems standards for secure data transmission have yet to be determined and discussions are currently taking place in the MExE forum (Mobile station application Execution Environment forum) at www.mexeforum.org (from which MExE specifications are also available). Reference may also be made to ISO/IEC 1170-3, "Information Technology - Security Techniques - Key Management - Part 3: Mechanism Using Asymmetric Techniques", DIS 1996.

Broadly speaking MexE defines a standardised application environment. A Delegation Protocol for a distributed network is set out, in particular, in 3GPP TS 23.057 "Mobile Station Application Execution Environment (MExE), hereby incorporated by reference. A relatively simple authentication protocol, using PKI, is currently enviagaged, in which the mobile terminal (MT) has a public key, either a root key securely installed in the MT (for example root keys for a number of CAs may be installed during manufacture), or a signed public key attached to or provided in a certificate. This public key is then used to check an executable signed with a corresponding private key. For example where software is obtained from a third party software developer the developer generates (or obtains from a CA) a public-private key pair and a certificate (signed by the CA and including the developer's public key). This (or in some instances a set of certificates for a key chain) is appended to the executable and the MT can then verify that the software was signed by a private key corresponding to the developer's (certificated) public key.

Reconfigurable, software defined radio (SDR) concepts have also been the subject of recent, active research (see, for example, "Authorization and use of Software Defined Radio: First Report and Order," U.S. Federal Communication Commission Washington, DC, September 2001). SDR-enabled user devices and network equipment can be dynamically programmed to reconfigure their characteristics to provide improved performance and/or additional features, and hence also offer the opportunity of additional revenue streams for a service provider. Software defined radio has applications in both civil and commercial and military sectors.

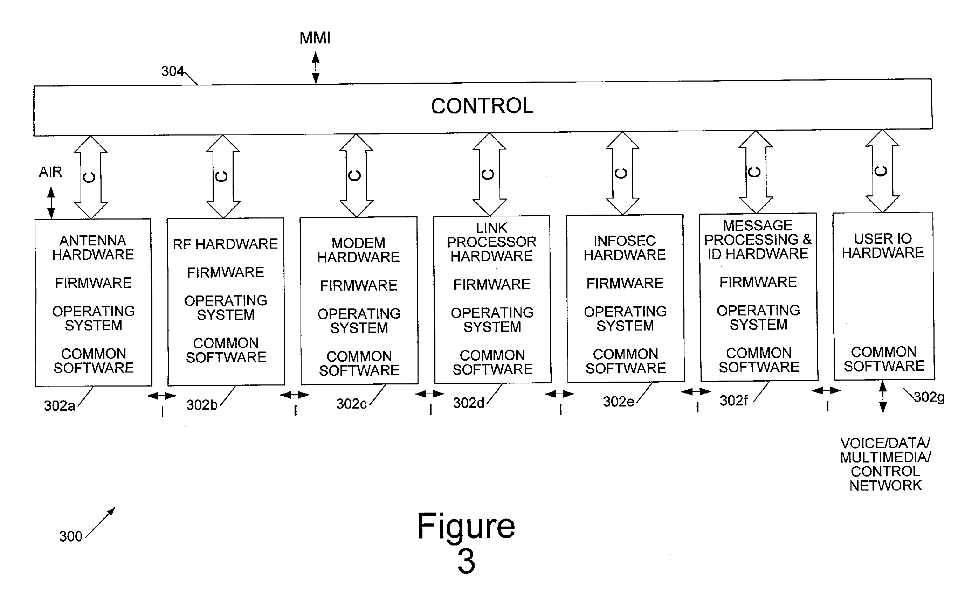

The SDR Forum (Software Defined Radio (SDR) Forum, http://www.sdrforum.org/) has defined an open architecture with a common software API layer with standardised functions. An outline of this arrangement is shown in Figure 3. In Figure 3 an SDR comprises a set of seven independent subsystems 302a-g each in turn comprising hardware, firmware, an operating system and software modules which may be common to more than one application. A Control function 304 provides control ('C') over each of the functional blocks, user traffic ('I') comprising data and information being exchanged between the modules. An SDR implementation in a mobile (wireless) terminal is analogous to software running on a generic PC, although for speed some baseband service implementations and control functions interface directly to the hardware layer rather than, say, via an intermediate real-time kernel or drivers. The SDR system of Figure 3 is suitable for use in implementing later described embodiments of methods according to the invention.

There is, however, a need to combine secure delegation concepts with secure (SDR) software download, for example in the context of a PAN. The reconfiguration process needs to obtain requirements, capabilities and profiles from applications, devices, and users, collating information from network detection or monitoring entities and downloading software components from repositories. This is potentially a highly distributed environment in which the delegation of trust is important.

Some of the aims of a security system are authentication (of the data originator or recipient, e.g. with password and/or biometric techniques), access control, non-repudiation, integrity of the transmitted data, e.g. between PAN nodes, and confidentiality (e.g. by encrypting messages between PAN nodes). There may also be provision for "anonymous" data download, that is the provision or broadcasting of data without specifically identifying a recipient. However existing security mechanisms lack support for accountability and the delegation of tasks to other entities. In this context, broadly speaking accountability refers to the association of an object, action or right with an entity, preferably in such a way that the association can be proved (or at least determined with a high probability) to another entity or party. Broadly speaking delegation refers to the authorisation (for example, to perform an action) of a second entity by a first, by sharing rights (or some portion of security policy or other data) so that the second entity is enabled to act in place of the first. Where accountability is delegated the rights or other data may be transferred rather than shared so that an action can be unambiguously linked with an entity.

Background prior art relating to secure delegation protocols can be found in M. Gasser and E. McDermott, "An architecture for practical delegation in a distributed system", *Proceedings of the IEEE Symposium on Security and Privacy,* pp. 20-30, 1990; M. Low and B. Christianson, "Self authenticating proxies", *Computer Journal,* Vol 33, pp. 422-428, October 1994; Y. Ding, P. Horster and H. Peterson, "A new approach for delegation using hierarchical delegation token", *Proceedings of the 2nd Conference on Computer and Communication Security*," pp 128-143, 1996; and in B. Crispo, "Delegation Protocols for Electronic Commerce", *Proceedings of the 6th IEEE Symposium on Computers*

*and Communications,* Hammamet, Tunisia, 3 - 5 July 2001.

Other background information may be found in M. Abadi, M. Burrows, C. Kaufman, and B. Lampson, "Authentication and delegation with smart-cards", Science of Computer Programming, 21:91-113, October 1993; M. Abadi, M. Burrows, B. Lampson and G. Plotkin, "A calculus for Access Control in Distributed Systems", ACM Transactions on Programming Languages and Systems, Vol. 15, No 4, Pages 706-734, September 1993; M. Gasser, A. Goldstein, C. Kaufman, and B. Lampson, "The digital distributed system security architecture", Proceedings of the National Computer Security Conference, 1989; K. R. Sollins, "Cascaded authentication", In Proceedings of the 1988 IEEE Symposium on Security and Privacy, pages 156-163, April 1988; and V. Varadharajan, P. Allen, and S. Black, "An analysis of the proxy problem in distributed systems", In IEEE Symposium on Security and Privacy, pages 255-277, 1991.

The delegation protocols described in these papers suffer from a variety of drawbacks including one or more of the following: a high computational cost and/or a high requirement for network bandwidth and resources; a demand for special infrastructure such as specialized delegation centres; a lack of accountability of delegation; unsuitability for use in diverse networks; in flexibility; and lack of support for multicasting delegation. For example, Sollins, which proposes a delegation passport requires a trusted static server with which all entities must register, to manage authentication tokens, whereas Crispo places undesirably high demands on computing resources, especially where implementation on a mobile device or terminal is contemplated.

The inventors' earlier UK patent application number 0220203.4 ("Methods and apparatus for secure data communication links", filed 30 August 2002) (and the related paper C. Y. Yeun, G. Kalogridis, and G. Clemo, "Secure Mobile Delegation for Future Reconfigurable Terminals and Applications", to appear in SDR Forum, November 2002) addresses some of these shortcomings but is nonetheless restricted in its ability to multicast delegation tokens. Multicasting is useful, for example, where it is desired to send substantially the same request to a plurality of different entities not all of which may accept the request. If a request was made to each entity in turn, waiting for a response before trying the next, the delegation process could be significantly slowed. Furthermore, although suitable for reconfigurable terminals and PAN applications, in other delegation scenarios a different profile of advantages may be preferred.

There is a plethora of potential applications for delegation including, for example, PAN applications and other applications such as the synchronization of sensitive personal files, mobile commerce, remote computing, and on-line upgrade of radio level software modules to reconfigure a device's hardware. There are also many kinds of network including internet-based networks (such as the Internet, intranets, and extranets), cellular communications networks and other home and office wired and wireless networks (such as IEEE 802.15 and Hiperlan/2). These have a variety of service and security requirements which in turn impact upon other parameters. For example power consumption and battery life are related to CPU data processing requirements and thus to the cryptographic load. Broadly speaking, however, current secure delegation techniques are either restricted to specific systems and/or networks or lack robustness and/or computational efficiency. For example, if they are lightweight they either lack clarity of accountability and authentication or they depend upon a specific infrastructure, such as a central delegation authority for issuing and maintaining or delegation tokens and/or delegation keys. Those that do not depend upon a specific infrastructure impose a heavy computational processing load and/or require long and complicated message exchanges. There are some protocols which have robust security features and reasonable performance but these still lack flexibility and are generally sub-optimal in many applications.

There is therefore a need for efficient, robust and flexible delegation protocols suitable for a range of services and operating environments.

According to a first aspect of the invention there is therefore provided a method of delegation from a first data processing entity to a second data processing entity, said first and second entities having a bidirectional communication link with one another, the method comprising sending a delegation token from said first entity to said second entity, said delegation token including information relating to a delegation request; receiving a reply from said second entity at said first entity, said reply including information for determining acceptance of delegation represented by said delegation token by said second entity; and sending a signature from said first entity to said second entity responsive to said reply, said signature comprising a signature of at least said delegation token.

The three message exchange protocol and the use of a signed delegation token facilitates multicast delegation and is also flexible so that it can be adapted, in embodiments dynamically, according to security and other requirements such as power consumption and network traffic requirements. Embodiments of the protocol also provide accountability and authentication. The adaptations of the protocol, described later, can be made automatically, for example in response to detection or request of a particular mode of operation.

Embodiments of the protocol are compatible with a range of applications and network environments including (but not limited to) mobile commerce and Internet service-related applications and personal area networks. A said first or second entity may therefore comprise a data processor such as a mobile terminal or server or, in some other distributed computing environment, a computer program code object. Likewise the communication link may comprise a wired or wireless link, such as a portion of a network, or some other link, for example a computer program code object.

The delegation token may comprise data such as request data, or program code, or both. Preferably the signature from the first entity is a PKI signature verifiable with a corresponding public key as this avoids the need for any further infrastructure.

The reply from the second entity may comprise a simple acknowledgement, or a message such as "I accept the delegation", in which case the message may be signed by the second entity, again preferably using a PKI signature. If signed, the signature can then be verified before the first entity sends the delegation token to the second entity. Additionally or alternatively the reply may include a delegation verification key and the signature may comprise a signature of this key and the delegation token. Broadly speaking any type of signature may be employed, such as the RSA signature mentioned above.

The delegation verification key is preferably one of a pair which is created (or at least retrieved) and managed by the second (delegate) entity; the other key of the pair, which may be termed a delegation-signing key, is preferably kept secret by the second entity. Thus this pair of keys is preferably managed on a peer-to-peer basis. This facilitates robust accountability without the necessity of a delegation authority service. The pair of keys may comprise keys for symmetric cryptography but preferably, for increased security, the keys are for an asymmetric cryptographic process.

In embodiments of the methods the contents of initial delegation request (when the token is sent) and the reply may be modified depending upon the security of the communication link (or network) and upon the trustworthiness of the second entity. For example where the network is relatively secure and the second entity trusted the reply need not be signed by the second entity. Where the link is less secure it is preferable that the first entity sends the delegation token with a signature, for example a signature of the delegation token, and it is further preferable that the second entity reply includes a signature of the second entity. Preferably both these signatures are PKI signatures.

Where the second entity is less trustworthy or untrusted the reply may also include a signature from the second entity generated using the (secret) delegation signing key. This key may be used, for example, to sign the delegation verification key.

In all cases where a delegation verification key is employed it is preferable that this key is bound together with the token in a signature of the first entity, for example in the signed delegation token. In this way the first entity can be held accountable for the delegation request, and since the delegation verification key is linked to the delegation signing key the second entity is also included within this accountability (as it is difficult to create two different private keys from the same public key).

It is further preferable for some or all of the messages sent and received include timestamp and/or nonce data to hinder a replay attack. Clock-based a timestamp generally requires entities with at least approximately synchronised clocks and a nonce may be preferred when this is not available. Such a nonce may, for example, be read from a file or may be generated by or used as a seed for a deterministic pseudo - random number generator (for example to generate synchronised series of pseudorandom numbers). For additional security/confidence an identity of a message sender may be included in a message and, optionally, in a message signature, although this is less important.

As can be appreciated the protocol is flexible and may be adapted according to a determined level of security. For example a mobile terminal may be programmed to recognise a user's home PC and consider it trusted. If there is a short range or encrypted wireless link (such as Bluetooth — Trade Mark) to the PC the link may also be considered secure. Similarly a terminal may be pre-programmed by a manufacturer to trust specific servers controlled by the manufacturer. In still other scenarios a terminal may ask a user whether or not to trust a link and/or delegate. In this way the cost of security, for example in terms of processing power/battery life, may be automatically reduced when certain types of attack are unlikely. This in turn leads to improved efficiency and, in many cases, reduced link or network traffic.

Some of the optional features which may be included in the protocol are: with the delegation token sent from the first entity, a (PKI) signature of the first entity; and with the reply, a delegation verification key and/or a (PKI) signature of the second entity and/or a signature generated using the delegation signing key. In embodiments of the method implemented on a terminal or other data processing system the terminal (or system) may select from a subset rather than from all these optional features.

The above described delegation methods may be readily extended to delegation from the second to a third entity, from this third to a fourth entity, and so on. In this way delegations may be cascaded. Different versions of the protocol may be employed in different delegations so that, for example, a lighter version of the protocol may be employed for delegation from a mobile terminal and a more robust and secure version for a subsequent delegation from, say, a server where the computational cost of security may represent less of an overhead. Multicast delegation may be implemented by arranging for the first entity to send the delegation token to a plurality of said second entities. If necessary this multicast delegation may also be cascaded.

The invention also provided a method for the second entity to accept a delegation request.

Thus in another aspect the invention provides a method of confirming acceptance of delegation from a first data processing entity to a second data processing entity, said first and second entities having a bi-directional communication link with one another, the method comprising receiving a delegation token from said first entity, said delegation token including information relating to a delegation request; generating a reply for said first entity, said reply including at least a delegation verification key comprising one key of a pair of keys, the other key of which comprises a delegation signing key, said delegation signing key being a key usable to generate a signature for a message from said second entity, said delegation verification key being usable to verify said signature; and sending said reply to said first entity to confirm acceptance of said delegation.

As previously mentioned the delegation verification and delegation signing keys are preferably produced by the second entity for example by reading the keys from a previously created file accessible to the second entity or by generating the keys. A pair of keys each comprising a large prime number may be generated, for example, using a Blum Blum Shub-type generator as described in L. Blum, M. Blum and M. Shub, "A simple unpredictable random number generator", SIAM Jounal on Computing, Vol. 15 pp 364-383,1986 and W. Alexi, B. Chor, O. Goldreich and C. P. Schnorr, "RSA and Rabin Functions: Certain parts are as hard as the whole", SIAM Jounal of Computing, Vol 17, pp 194-209, 1988, to which reference may be made.

In response to the reply the first entity may send the second entity a signed delegation token, that is a signature of data including the delegation token and, optionally, the delegation verification key sent to the first entity from the second entity. When cascading delegation from the second entity to a third entity a second three-way message exchange process may result in a second delegation token and associated second delegation token signature (second signed delegation token), which may be passed to the third entity together with the delegation token and signature (signed delegation token) from the first entity, to create a chain of accountability.

Where the second entity delegation verification key was included in the data signed by the second entity this key is also passed to the third entity to allow verification of the signature. Where delegation is cascaded the delegation verification key of each previous entity in the chain should be included in the data passed on to a next entity for similar reasons. (It will be noted, however, that the first entity does not need to create a delegation verification key).

At the end of a chain the last delegate contacts a delegation end point to request a service (although where there is no cascaded delegation such a chain may have a length of one entity).

According to a further aspect of the invention there is therefore provided a method of requesting a service, by a delegate data processing entity in a chain of delegate data processing entities of length at least one, from an end point data processing entity, the method comprising sending a request from said delegate entity to said end point entity, said request comprising a set of delegation tokens, one from each delegate entity in said chain, each said delegation token including information relating to a delegation request; a set of delegation token signatures, one from each delegate entity in said chain, each comprising a respective delegate entity signature of a respective said delegation token; and service request data.

The service request data may be request to provide a service to the start point of the chain or to some other entity. Broadly speaking the end point entity receives a set of delegation tokens and corresponding signatures (signed delegation tokens) for entities in the chain together with, where implemented, a corresponding set of delegation verification keys and, optionally, a set of identifiers of entities in the chain. Optionally the service request data may be signed using the delegation signing key of the last delegate entity and/or using a PKI key of the last delegate.

In another aspect the invention provides a method of delegating from a first data processing entity to a second data processing entity using a delegation protocol, said delegation protocol including sending a signed delegation token from said first to said second entity, said signed delegation token comprising a signature of a delegation token and of a key received from said second entity by said first entity.

The above-described protocol may be simplified so that, broadly speaking, only the third message comprising the signed delegation token is sent from a delegating entity to a delegate.

Thus in a further aspect the invention provides a method of delegating from a first data processing entity to a second delegation protocol entity, the method comprising sending a message from said first to said second entity, the message including at least a delegation token; a signature of a combination of said delegation token and a secret key; and an encrypted version of said secret key.

In this variant of the protocol the secret key is kept secret from other entities not permitted to know the key, such as potentially malicious third parties. The secret key may comprise a key of a symmetric cryptographic algorithm, in which case the key is common to both the first and second entities and shared by the first entity with the second entity. Alternatively the secret key may comprise a private key, or preferably a public-private key pair of an asymmetric cryptographic algorithm.

The delegation token and encrypted secret key may be provided within the signature by employing a signing algorithm which permits message recovery, or a signature may be generated which does not permit message recovery, in which case the secret key is separately encrypted, for example using the public entity's public key. Once the second entity has the secret key this may be used for encryption or some other function related to the delegation token, such as activation of a product. Such a product may comprise, for example, software which requires an activation key to enable the software to be loaded and/or saved and/or communicated and/or run.

The above-described protocols and methods are flexible and in embodiments may be varied, that is operated in a selected one of a plurality of modes of operation, according to perceived security requirements. Thus, for example, the method or protocol may be varied in accordance with one or more determined security parameters, such as a parameter classifying a perceived level of security of a communications link between the delegating entity and the delegate entity and/or a parameter classifying a level of trustworthiness of the second entity. Such security parameters may be determined by interaction with a user but preferably classifications are made automatically, for example based upon user-input configuration data, default settings, pre-programmed data (such as data pre-programmed by a manufacturer or system/network administrator) and/or other data such as PKI certificate data. In response to a determined level of security the protocols may be varied, for example in the above-described protocol in which a delegation token, signature and encrypted key are sent, by increasing the sending security by sending or exchanging additional messages and/or by including additional signature or key data.

The invention also provides a data processing entities/systems configured or programmed to implement the above-described methods/protocols.

In a further aspect, therefore, the invention provides data processing apparatus configured for delegation to a second data processor, the apparatus comprising a data memory operable to store data to be processed; an instruction memory storing processor implementable instructions; and a processor coupled to the data memory and to the instruction memory and operable to process data in accordance with the instructions, the instructions comprising instructions for controlling the processor to send a delegation token to said second processor, said delegation token including information relating to a delegation request; receive a reply from said second processor, said reply including information for determining acceptance of delegation represented by said delegation token by said second processor; and send a signature to said second processor responsive to said reply, said signature comprising a signature of at least said delegation token.

The invention further provides data processing apparatus configured for accepting delegation from a delegating data processor, the apparatus comprising a data memory operable to store data to be processed; an instruction memory storing processor implementable instructions; and a processor coupled to the data memory and to the instruction memory and operable to process data in accordance with the instructions, the instructions comprising instructions for controlling the processor to receive a delegation token from said delegating processor, said delegation token including information relating to a delegation request; generate a reply for said delegating processor, said reply including at least a delegation verification key comprising one key of a pair of keys, the other key of which comprises a delegation signing key, said delegation signing key being a key usable to generate a signature for a message from the data processing apparatus, said delegation verification key being usable to verify said signature; and send said reply to said delegating processor to confirm acceptance of said delegation.

The invention further provides a data processor configured to request a service from an end point data processor when in a chain of delegate data processors, the chain having a length of at least one, the data processor comprising a data memory operable to store data to be processed; an instruction memory storing processor implementable instructions; and a processor coupled to the data memory and to the instruction memory and operable to process data in accordance with the instructions, the instructions comprising instructions for controlling the processor to send a request to said end point processor, said request comprising a set of delegation tokens, one from each delegate processor in said chain, each said delegation token including information relating to a delegation request; a set of delegation token signatures, one from each delegate processor in said chain, each comprising a respective delegate entity signature of a respective said delegation token; and service request data.

Embodiments of a described method may be implemented on a mobile terminal or device or on a server or on some other computing device. In some implementations a combination of hardware and software may be employed so that, for example, cryptographic functions may be provided by a specialised hardware accelerator. Some implementations may even rely entirely on hardware such as gate arrays and/or ASICs.

In further aspects the invention provides computer program code to implement the above-described methods on one or more data processing systems. This code may be stored on a carrier such as a hard or floppy disk, CD- or DVD-ROM or on programmed memory such as read-only memory or Flash memory. The code may also be provided on an optical or electrical signal carrier. As previously mentioned the invention may be implemented either purely on software or by a combination of software (or firmware) and hardware, or purely in hardware. Parts of the described methods need not be necessarily be performed on a single processing element but could be distributed amongst a plurality of such elements, for example amongst networked processors.

The invention will now be further described, by way of example only, with reference to the accompanying figures in which:

Figures 1a and 1b show, respectively, an example of a personal area network and related infrastructure, and a generic structure for a 3G mobile phone system;

Figure 2 shows a schematic representation of a secure communications link between a mobile terminal of a communications network and a server;

Figure 3 shows an example of a software defined radio (SDR) hardware and software architecture;

Figure 4a and 4b show, respectively, a summary of a flexible protocol according to an embodiment of the invention, and an outline flow diagram of a protocol message selection procedure;

Figure 5 shows a chain of mobile entities in communication with a server, configured to implement a secure delegation protocol; and

Figure 6 shows a computer system suitable for use as a terminal or the server of Figure 5, for implementing a method according to an embodiment of the present invention.

Initially it is helpful to establish the notation which will be employed in describing preferred embodiments of the protocol.

Consider a distribution system such as a wireless network. Entities within this network are denoted with capital letters: Delegates are denoted by $A_i$ where $i$ labels an entity in a chain of delegation, an initial principal (delegate) is denoted $A_1$, and a principal that will perform the final transaction is denoted with the letter $B$. Between $A_1$ and $B$ there is always at least one entity, $A_2$, that receives delegation from $A_1$. Delegate $A_2$ may further transfer some delegation rights, if applicable, to $A_3$ and so on. At the end of this chain or cascade a final delegate entity $A_f$ exercises the delegation rights by contacting $B$. When a principal delegates to another principal it forms a Delegation Token, and the Delegation Token that $A_i$ gives to $A_{i+1}$ is denoted as $DT_i$.

A Public Key Infrastructure (PKI) is assumed within which parties such as manufacturers, operators, third parties and government regulators are provided with certificates. In particular we assume that all entities are part of the same PKI and that as a result a public key of each entity is known or accessible to each other entity so that the corresponding private key can be used for authentication, verification and accountability. For example a mobile terminal's certificate, and optionally other certificates, may be downloaded and/or stored, for example in a tamper-resistant hardware module within the terminal. A delegate $A_i$ has a key pair denoted $SK_i$ and $VK_i$ termed, respectively, a Signing Key and a Verification Key, that are part of the Public Key Infrastructure (PKI).

Next we denote $DSK_i$ and $DVK_i$ as a Delegation Signing key and a Delegation Verification key respectively. This is another asymmetric key pair that $A_i$ will use for delegation purposes. This key pair is created and maintained by $A_i$, but $A_{i-1}$ has to authorise it in order to give power to $A_i$ to exercise roles that are defined for it by the received $DT_{i-1}$. This key pair is not part of the PKI and only the public key is shared between $A_{i-1}$ and $A_i$. Thus only $A_i$ is responsible for keeping $DSK_i$ private. In what follows when $SK_i$, $VK_i$, $DSK_i$ and $DVK_i$ are used standalone then they indicate the actual keys but when they are followed by brackets (*(data)*) then they represent the actual cryptographic function that will either sign or verify the bracketed data. The signing functions need not (but may) provide message recovery.

As the skilled person will understand, for every signing function it is preferable that the function is applied to a hash value of the (bracketed) data but, for clarity, this will not be explicitly denoted in the equations specifying the protocols described later. This, for example, $DSK_i(data)$ and $SK_i(data)$ preferably represent $DSK_i(h(data))$ and $SK_i(h(data))$ respectively, where $h()$ denotes a hash function.

Finally, in equations (1) and (2) below we define a Signed Delegation Token *(SDT$_i$)* that $A_i$ transfers to $A_{i+1}$, preferably with a fresh random sequence value or timestamp.

$$SDT_i = r_i \| SK_i(A_i \| A_{i+1} \| DT_i \| r_i \| DVK_{i+1}) \qquad (1)$$

where

$$r_i = T_i \| N_i, \text{ or } r_i = T_i, \text{ or } r_i = N_i \qquad (2)$$

The symbol $\|$ denotes concatenation. The fresh random sequence, $r_i$, represents a unique piece of information that may be is a time-stamp $T_i$, or a nonce, $n_i$, or a combination of both of these. Either a sequence number or random data may be used as a nonce. The value $r_i$ is produced by $A_i$ just before it creates and sends $SDT_i$ and thus it is bound to $SDT_i$. In other cases $r_i'$ will be used to denote a timestamp or nonce.

A concatenation function $C()$ will also be employed as defined in equation (3) below:

$$C_i(a_{i-k})=a_1\|a_2\|...\|a_{i-k} \tag{3}$$

Next the provision of authentication, integrity and accountability will be considered.

Accountability refers to evidence that a specific actor performed a specific action. Accountability of delegation should enable detection of a fraudulent delegate actor who does not strictly comply with the delegated rights. In addition it should enable an innocent delegate to protect itself from allegations of misusing its delegated power.

For robust accountability, it is preferable in embodiments of the protocol that use a delegation token ($DT_i$) is subject to the following:

- A clear definition of a set of tasks to be delegated from one specific entity to another specific entity. A format for such a definition is described in M. Abadi, M. Burrows, B. Lampson and G. Plotkin, "A calculus for Access Control in Distributed Systems", ACM Transactions on Programming Languages and Systems, Vol. 15, No 4, Pages 706-734, September 1993, which format is specifically hereby incorporated by reference.
- Policy and restrictions relating to usage of the delegated rights. These should be securely bound to the set of tasks mentioned above, for integrity reasons and preferably should include an absolute expiry date and/or time after which the delegation rights are automatically removed.
- A clear statement of what can be used as a legitimate delegation credential, here the Signed Delegation Token ($SDT_i$) as defined above. This requirement should be known to all the actors (entities) involved and no alternatives should be permitted.
- A clear understanding of the degree (usually 100%) to which a delegate is responsible for a specific set of actions.

In order to provide a simple and efficient but robust solution the delegation employs two asymmetric key pairs, (one key of) one pair of which is registered with a PKI authority to meet the authentication requirements. Furthermore the delegation verification key (and hence, by implication the delegation signing key) is combined with a (authorization) signing key $SK$ to combine delegation with authorization.

An important feature of the protocol described herein is its flexibility, which allows it to be adapted to a range of security environments. In particular the protocol is able to adapt to provide an adjustable level of security, that is of delegation authentication and accountability, so that the level of security and hence the computational and/or communications traffic burden can be reduced when the environment permits. More particularly the protocol is adaptable dependent upon the trust of a delegating device in the security of a communications link to a delegate and/or upon the trust of the delegating device in the delegate device.

First we consider the communications link or medium and define two different classes, C1 and C2.

Class C1 relates to a communications link or environment that is supposed to be secure. One example of a class C1 connections is a direct, wired connection between a mobile terminal and a computer or a connection via a private trusted LAN (local area network). Another is a mobile terminal connected to a trusted PAN or wireless LAN either in a home environment or in an office, where security is provided by the underlying network technology, for example Bluetooth, IEEE802.11 or the like.

Class C2 relates to communication links with a possibility of communications interception by malicious entities, and this class is adopted when delegation will take place in a potentially hostile environment. One example of a class C2 environment is a terminal connected to an ad-hoc or public network that either offers no security or has security risks. Another example is where a terminal uses a (wireless or fixed) internet access point or delegates through an untrusted or unknown network or networks.

Next we consider the delegates and define four categories of trust:

a) T1: In this category the mobile device blindly trusts the delegate. An example of such a delegate might be an agent service operating at a platform such as a home PC or a private workstation.
b) T2: The terminal has high levels of trust for the delegate. For example the delegate be a service or a site that is known or guaranteed in some way to the delegating device or user. An example might be a service running in a corporate LAN or a service running anywhere that bears the terminal manufacturer's digital signature.
c) T3: The terminal has acceptable levels of trust for the delegate. An example of such a delegate could be an authenticated entity with an acceptable certificate.
d) T4: In this case the terminal does not trust the delegate.

As previously mentioned, all entities are assumed or expected to be registered with a PKI authority. The delegation protocol also assumes that (i) the delegation power is transmitted as a specially signed token ($SDT_i$) after the delegate has accepted the terminal's request to accept responsibility for a specific role (described in $DT_i$), and (ii) any entity is capable of dynamically creating new key pairs and is also responsible for keeping safe the signing (private) keys of such key pairs.

Using the previous classifications five modes of operation of delegation by a terminal are defined as set out in Table 1 below:

Table 1

| Mode | Link security/delegate trust |
| --- | --- |
| A | C1/T1 or C1/T2 |
| B | C1/T3 |
| C | C2/T1 or C2/T2 |
| D | C2/T3 |
| E | C1/T4 or C2/T4 |

The messages exchanged in these different modes of operation are set out below, the notation $A_i \rightarrow A_j$ denoting a message sent from $A_i$ to $A_j$.

1. First message $\langle A_1 \rightarrow A_2 \rangle$:

$\{a\}or\langle b \rangle$: $A_1 \| DT_1$
$\{c\}or\{d\}$: $A_1 \| DT_1 \| r_1 \| SK_{A1}(A_2 \| DT_1 \| r_1')$

2. Second message $\langle A_2 \rightarrow A_1 \rangle$:

$\{a\}$: $DVK_2$
$\{b\}or\{d\}$: $r_2' \| DVK_2 \| DSK_2(DVK_2) \| SK_{A2}(A_1 \| DT_1 \| r_2' \| DSK_2(DVK_2))$
$\{c\}$: $r_2' \| DVK_2 \| SK_{A2}(A_1 \| DT_1 \| r_2' \| DVK_2)$

3. Final message $\langle A_1 \rightarrow A_2 \rangle$:

$\{a\}or\{b\}or\{c\}or\{d\}$: $SDT_1$

In mode $\{e\}$ the delegate is an untrusted third party — that is although the delegate may have a signing key and verification key pair these are not trusted. The terminal $A_1$ determines that $A_2$ is not known before sending the first message, for example by checking local store or certificate repository for a certificate of $A_2$. In this case an additional authorisation step precedes implementation the protocol. For example a warning message may be displayed together with a request for user confirmation that delegation to the delegate is authorised and may take place. It will be appreciated that such an initial authorisation step may take many forms, depending upon the application. If authorisation is confirmed the protocol may proceed according to any of modes $\{a\}$ to $\{d\}$ depending upon the circumstances, although generally more secure modes such as mode $\{c\}$ or mode $\{d\}$ may be preferred.

In all cases the delegation protocol comprises a three message exchange. First the terminal makes a delegation request. The delegate then either accepts or rejects the request. If the request is rejected (or ignored) the protocol terminates. If the request is accepted the delegate creates a new delegation key pair and sends back confirmation of acceptance as well as a request for giving delegation authority to the delegation key pair. Finally the terminal grants the delegate's request and binds the delegation token with the delegation key by signing these to form a signed delegation token $SDT_1$. In a simplified version of the protocol the reply from the delegate and the signed delegation token may omit the delegation (verification) key.

The modes of operation will now be described in more detail, starting with mode $\{d\}$.

In mode $\{d\}$ the request ($DT_1$) is accompanied by a signature and a timestamp thus authenticating $A_1$ to $A_2$ and hindering reply attacks. Delegate $A_2$ creates $DVK_2$ and $SDK_2$ and sends back $DVK_2$ for $A_1$ to authorise, but keeps $SDK_2$ secret. In order to prove the existence of $DSK_2$ this key is used to sign $DVK_2$ and thus although $A_1$ is not told the value of $DSK_2$ it nevertheless has good reasons to believe that $DSK_2$ exists and is unique. However this knowledge will only significantly improve security when this delegation mechanism is followed by other delegation processes, as described later, when cascading delegation. Before approval of a specific delegation, the strength of the delegation key may be checked. In mode $\{d\}$ delegate $A_2$ additionally authenticates itself to $A_1$ by concatenating a signature of the message. The same signature also can be used as evidence by $A_1$ that $A_2$ has accepted the delegation request

($DT_1$).

In the final message of the protocol, which is the same for all the modes, $A_1$ sends $A_2$ the signed delegation token, which gives $A_2$ the power to exercise this delegation. Although $SDT_1$ can be intercepted and can be read by any other entity it is usable only by $A_2$ because the signed delegation token ($SDT_1$) signature, which is verifiable, includes (a signature of) an identifier for $A_2$.

Mode {c} (insecure link but relatively trusted delegate) is similar to mode {d} except for the delegate's response (the second message). In this message in mode {c} the delegate sends back the delegation verification key, authenticates itself and protects the message's freshness with a nonce and/or timestamp, but provide information in support of the nature of $DVK_2$. However, this is not necessary because in this mode it is assumed that $A_2$ belongs to the T1 or T2 domain.

Mode {b} requires $A_2$ to send back a signed declaration that the delegation is accepted, similarly to mode {d}, since $A_2$ (in category T3) is relatively untrusted. However since the communications link is considered relatively secure (and hence because a man-in-the-middle attack is considered unlikely) $A_1$ need only send an unsigned $DT_1$ in the first message, increasing the protocol's efficiency. Since $A_1$ does not in this step authenticate itself to $A_2$, delegate $A_2$ formally signs acceptance of a delegation that might originate from a malicious party. However, $A_1$ is obliged to authenticate itself and approve the delegation in the final message.

Mode {a} is the most lightweight version of the protocol and the cryptographic burden for the terminal is merely the creation of a signature in the last message. In this case there is only have one-way authentication but due to the trusted nature of $A_2$ unilateral authentication is not regarded necessary. Again the communications medium is considered secure and thus the possibility of a man-in-the-middle attack is discounted.

In a simplified variant of the protocol entity $A_i$ creates a delegation token $DT_1$ and a secret key $M$, signs a combination of $DT_1$ and to generate the signed delegation token $SDT_1$ and then sends the following message:

$$\langle A_1 \rightarrow A_2 \rangle\colon A_1 \| A_2 \| DT_1 \| SDT_1 \| enc\,(M)$$

where $enc\,(M)$ denotes an encrypted version of $M$. Key $M$ may comprise a common secret key between $A_1$ and $A_2$ for a symmetric algorithm or it may comprise a key pair suitable for an asymmetric cryptographic algorithm (in this latter case the skilled person will recognise that only one of the pair needs to be encrypted). The encryption $enc()$ may be either be performed with a public key of $A_2$, or may employ another common secret key shared between $A_1$ and $A_2$, for example from a prior key exchange protocol, or a signature algorithm permitting message recovery may be used, in which case there is no need to separately include $DT_1$ and $M$. An example of such an algorithm is the RSA signature with message recovery algorithm (ISO/IEC 9796, "Information technology - Security techniques - Digital signature scheme giving message recovery", International Organization for Standardization, Geneva, Switzerland, 1991). This simplified version of the protocol may also be implemented flexibly, for example by increasing the security of the sent message by adding further messages and/or signatures and/or keys as described above. Thus, for example, initial first and second message along the lines described above may be added to provide additional security for sending the signed delegation token (and delegation token and key).

The terminal delegation protocol that has been presented can be straightforwardly extended to cascade delegation.

When cascading delegation to a further entity $A_3$ the initial steps are as described above for delegation to $A_2$. Cascade delegation should preferably be permitted by the first delegation token (that is this delegation token should preferably include data indicating that cascade delegation is permitted). There then follows an exchange between $A_2$ and $A_3$ in which the first two messages correspond to the first two messages between $A_1$ and $A_2$. Following this the delegate (in this case, $A_3$) that wishes to forward the delegation binds (in a new signed delegation token) the new Delegation Verification Key that has been received with the new Delegation Token that has been formed from the previous delegation token. For accountability the new signed delegation token is accompanied by the previous signed delegation tokens. This third message thus takes the form shown below (for delegation from $A_2$ to $A_3$) and a corresponding third message is sent for each subsequent delegation.

$$\langle A_2 \rightarrow A_3 \rangle\colon A_1 \| DT_1 \| DVK_2 \| SDT_1 \| SDT_2 \| DSK_2(SDT_2)$$

A cascade or chain of delegation can have an arbitrary length and in the general case, for delegation from $A_{i-1}$ to $A_i$ the third message of the exchange is:

$$\langle A_{i-1} \rightarrow A_i \rangle\colon C_i(A_{i-2}) \| C_i(DT_{i-2}) \| C_i(DVK_{i-1}) \| C_i(SDT_{i-1}) \| DSK_{i-1}(SDT_{i-1})$$

It will be appreciated that $A_1$ does not create a $DVK_1$ and hence where implied in the above equations is considered to be null data. In a chain or cascade of delegation a delegate need only verify the Signed Delegation Token it receives from its immediate predecessor and need not verify the whole chain of Signed Delegation Tokens.

The final delegate, $A_f$, contacts the end point ($B$) which is to provide a service. Delegate $A_f$ proves to B that a valid $SDT_{f-1}$ is held and requests a service ($SRV$) to be granted to $A_1$ or to some other entity either in or outside the chain. The server (B) verifies that the service request ($SRV$) complies with the last Delegation Token, and also verifies that all the Delegation Tokens, which should be attached, comply with their previous tokens. The verification is performed iteratively until the whole chain of Delegation Tokens is exhausted and the server finally reaches, verifies and parses $DT_1$. In addition for integrity and accountability reasons the final delegate should provide the server with a Signed Delegation Token and should preferably also use a Delegation Signing Key to create and send a signature that binds $A_f$ with the service request $SVR$. Thus in one embodiment a final message in the chain has the following structure:

$$\langle A_f \to B \rangle : C_f(A_f) \| C_f(DT_{f-1}) \| C_f(DVK_f) \| C_f(SDT_{f-1}) \|$$

$$r_f \| SRV \| SK_f(A_f \| B \| SRV \| r_f) \| DSK_f(r_f \| SRV)$$

In terms of accountability, the final delegate is responsible for the proper usage of the $SDT_{f-1}$ that receives from the previous entity as well as for the $DSK_f$ it creates. In addition, although the $SRVI$ is bound with $A_f$, this does not necessarily imply that $A_f$ is accountable for $SDT_{f-1}$. The responsibility for the creation of these tokens is transmitted backwards and in this way an entity which misuses the received rules may be detected. If all delegates successfully demonstrate legitimate actions, then the chain of responsibility for the provision of service eventually ends in $A_1$, which created the initial Delegation Token.

As can be seen, the final delegate does not create a new Signed Delegation Token but instead creates a service request $SVR$. In embodiments of the protocol $SVR$ has a similar format and functionality to a signed delegation token $SDT$ but does not permit $B$ to delegate accountability for $SVR$ elsewhere. Entity $B$ may attempt to locate a candidate $B'$ to whom to further delegate the $SRV$ (after encapsulating it in a delegation token $DT$ format). However such a further delegation is performed as a new delegation rather than as an extension of an existing delegation and the existing chain therefore ends at $B$. In a more general modification to the protocol the final delegate $A_f$, may send a delegation token $DT_f$ rather than a service request $SRV$ to the end point of the chain, but in most cases sending a service request is preferable.

Where the chain of delegation is successful $B$ serves the appropriate entity and sends it any necessary data, preferably securely. This data need not be sent back along the chain of delegation. In most cases a service will be provided to $A_1$, but a service may be provided to an arbitrary entity specified in $SRV$ in compliance with the specifications of $DT_1$ and the whole chain of $C_f(DT_{f-1})$.

Delegation to the end point may be accomplished with just one message as there is no need to exchange a delegation key, but a three message exchange protocol could also be used. Broadly speaking a three message protocol provides three main advantages: a response to an initial message (helpful for cascade delegation/multicasting), formal proof of acceptance of delegation, and provision for a delegate to create and return a delegation verification key, and the first two of these features are also useful when delegating to an end point.

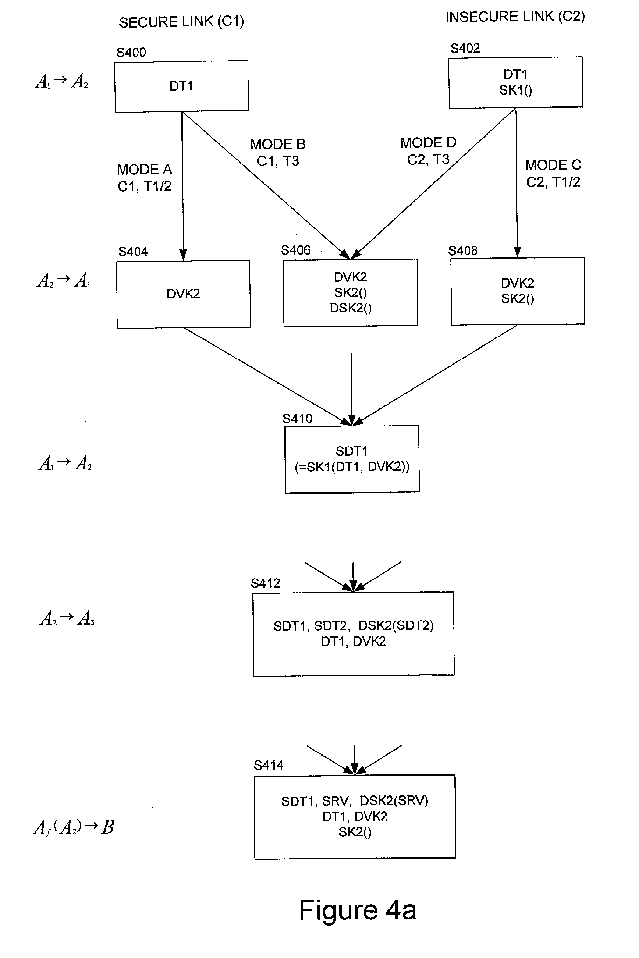

Figure 4a shows a summary of messages sent in the above-described protocol under a range of operating conditions. An initial message is sent according to step S400 or S402, depending upon whether or not the communications link is secure. The reply for a secure link is outlined in steps S404 and S408 for trusted terminals; for less trusted terminals the reply is as outlined in step S406. The final message, as outlined in step S410, is common to all the modes of operation. The final message for a further delegation is outlined in step S412 (it will be appreciated that $DT_2$ is received by $A_3$ in the first of the three messages exchanged between $A_2$ and $A_3$), and the message sent to the end point is outlined in step S414.

The above described protocol and its variants do not require any special architectures and merely leverage a conventional PKI infrastructure. There is no need for any specialised centralised control, and the protocol is scalable. The choice of the mode of delegation (and optionally determination of the security classes) may take place in the terminal, which allows data processing entities employing embodiments of the protocol to be compatible with diverse operating environments.

When initially activated the terminal will generally default to one of the more secure modes such as mode {$d$} or mode {$c$} which will, in any case, be the preferable modes for many scenarios. If not previously specified the user may be urged to configure the mobile device for a current or default working environment, for example by specifying a home PC identity and certificate. In some instances, depending upon its set-up, a terminal may automatically initialise, and some cases initial configuration data may have been installed by a manufacturer or network operator, for example to define one or more of the manufacturer's (or operator's) servers as trusted. Upon entering a secure and trusted PAN the terminal may choose another mode of delegation such as mode {*b*} or {*c*}; this detection and mode change may be performed automatically.

The user may also need to initialise the terminal with a mobile agent, for example a personal mobile agent (MA) that will operate in a private home machines. Such a MA may have previously been installed, for example by a manufacturer, or may, for example, be dynamically downloaded. The skilled person will appreciate that there are many ways in which such a MA may be provided. For example a MA to locate a taxi service may be provided from a server associated with an airport and, with user authorisation, downloaded and run to delegate the task of finding a taxi. In such a case the terminal may need to determine whether the user is in a safe environment (for example, at home) or in a potentially hostile environment, and choose between modes {*a*} and {*c*}. Generally the terminal may default to a mode appropriate to a potentially hostile environment unless it can determine that the environment is safe.

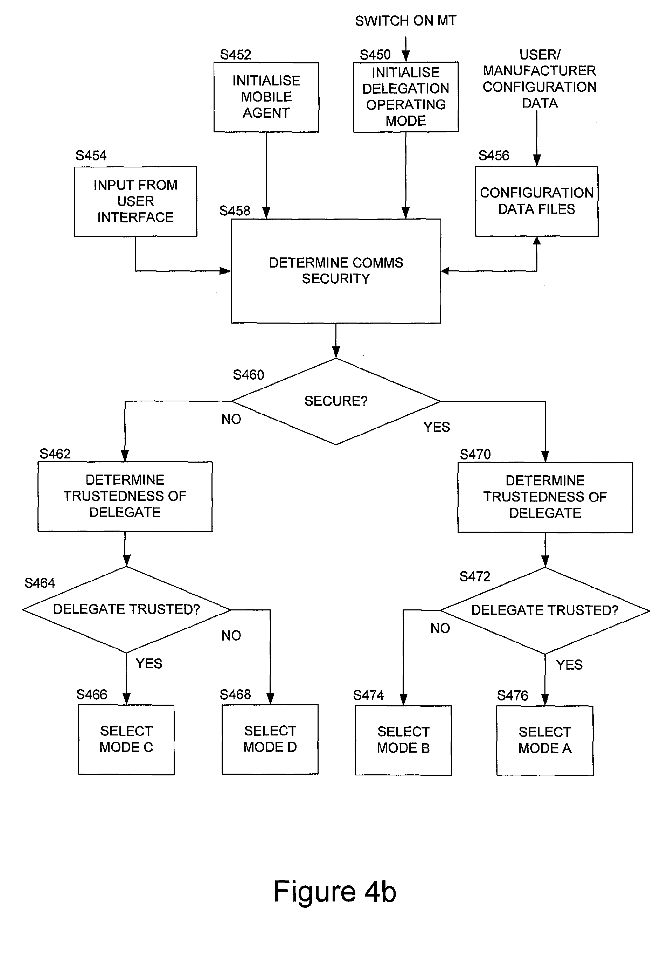

Figure 4b shows an outline flow diagram of a such a protocol message selection procedure. At step S450 following switch-on the terminal initialises a default operating mode, such as mode {*d*} and may also, at step S452 (or in response to a user command), initialise a mobile agent. The terminal then determines the communications security insofar as it is able (steps S458, S460) using information from configuration data files (S456) derived from manufacturer and/or user input data, and from other user input data (S454). The terminal then attempts to determine the trustedness of a potential delegate (S462, S470), using similar data, and makes decisions (S464, S472) on the basis of the results, generally (although at the option of the user) defaulting to an assumption of an insecure communications medium and untrusted delegate. An operating mode of either a, b, c, d (or e, not shown in Figure 4b) is then selected depending upon whether the communications medium is secure or insecure and depending upon whether the delegate is trusted or untrusted, respectively.

It is preferable that a protocol mode of operation be selected automatically. This can be facilitated by providing the mobile terminal with preinstalled Root Certificates from the manufacturer or various other authorities and also by providing the mobile terminal with secure and robust mechanisms for synchronising for the first time with various other entities such as a home PC, a personal roaming Mobile Agent and/or an office or factory computer system.

Embodiments of the delegation protocol using asymmetric cryptography have been described but symmetric cryptography may also be employed, using a symmetric delegation key ($K_i$) instead of a delegation asymmetric key pair. When using symmetric cryptography the protocol is amended as follows:

a) $K_i$ is exchanged in a secure manner (using conventional techniques);
b) $K_i$ may be created by either the delegating entity or the delegate; and
c) The signed delegation token is defined as in equation (4) below:

$$STD_i = r_i \| SK_i(A_i \| A_{i+1} \| DT_i \| r_i \| K_i) \tag{4}$$

Embodiments of the described delegation protocol also have the advantage that they are compatible with other delegation algorithms provided that these (i) deliver delegation by sending $SDTi$, as defined either in (1) or (4); and (ii) use the same or compatible delegation tokens $DT_i$. This is one reason for enhancing the security in mode {*d*} by having the delegate prove that he uses an asymmetric key pair for delegation purposes instead of a symmetric one (that is by providing a signature of the delegation verification key signed with the delegation signing key).

Embodiments of the protocol is compatible with cellular networks and similar networks offering wireless Internet services, as well as with the MExE specifications, although applications of the protocol are not limited to these platforms. Referring to MExE, for example, this classifies downloaded material into four distinct domains according to the properties of an accompanying digital signature. For every domain specific permissions are given and the application is forced to limit itself to a specific functionality. This is mainly achieved by forming a Java sandbox. The above described delegation protocols match well with such a framework, if one takes (using MExE terminology) T2 to be either the Operator or the Manufacturer domain, T3 to be the trusted third party and T4 to be the untrusted third party. As a result, after initial authentication, the mobile device will automatically know the delegate's domain and consequently which mode of delegation operation to use.

Some advantages provided by embodiments of the protocol are a reduction in data traffic because redundant information that one principal is supposed to know about another principal is not resent so that even with three message exchanges the total number of bytes exchanged is reduced, because cryptography is not used when there is no practical risk, and because the different modes of operation allows a reduction in message length where the operating environment permits. Embodiments of the protocol are also computationally relatively inexpensive because of the controlled usage of cryptographic functions, and because the creation of delegation keys, which places demands on CPU and battery power, is carried out by the delegate rather than by the terminal. Furthermore performance is generally enhanced by the ability to multicast.

Consider a mobile device which enters a PAN that has access to the Internet, through which the terminal decides to delegate a specific task (for example a mobile commerce application) to a home PC. This can be achieved with a single delegation but the PC may want to make the same service request to a multitude of servers and choose the best one according to their responses. This is not available in a single message delegation because the PC is then constrained to always use the same agent and if the service is or becomes unavailable it must either rely on the server refusing the service request or wait until the delegation expires before proceeding with another agent. Multicasting delegation with the above described three message exchange protocols can alleviate such difficulties, resulting in the development of better markets and quality of service.

Security aspects of the protocol will now be briefly reviewed.

In all modes of operation of the above described embodiments accountability and authentication is provided by the third message. Timestamps and/or nonces help ensure freshness and uniqueness of an accompanying message is provided and reduce the risk of a reply or denial-of-service attack. In some circumstances it may be difficult to achieve adequate time synchronization between two communicating parties and use of a nonce is therefore preferred, even where a timestamp is also present.

While operating in mode {a} or {b} $DVK_2$ and $DT_1$ are sent in plain text but security is provided because the terminal binds the Delegation Verification Key with its own identity and the identity of $A_2$, and as a result the $SDT_1$ will only have value in the hands of $A_2$ and only if the genuine $DVK_2$ has been signed. Whenever there is no protection against a man-in-the-middle attack the mobile terminal will know (although without proof), that either the proper or another delegate has accepted the delegation request. However in such a case a delegate is still accountable for its actions. This can be verified if one hypothesises that a fraudulent entity $A_2'$ manages to impersonate $A_2$ and further cascade the delegation since in this case, at the end point the server is be able to track down the fact that $A_2'$ misused the $SDT_1$ that was intended for $A_2$.

A difference between mode {c} and mode {d} is that in mode {d} the delegate explicitly proves that the $DVK_i$ sent back for approval is part of an asymmetric key pair. This makes the delegate accountable for using $DVK_i$ (where it is one of an asymmetric key pair). Generally asymmetric offers more robust accountability than symmetric delegation as there is no secret key that need to shared.

The security of the protocol also depends on the security of the PKI. The classification of the delegates is a result of the verification phase and as a result it is preferable that an authentication process takes place before delegation commences. It is generally the case that well defined regulations govern certificate authorities and certificate storage and management. Finally it is preferable for accountability reasons all entities maintain audit trails, preferably in safe and secure storage, for all the signed actions and responses.

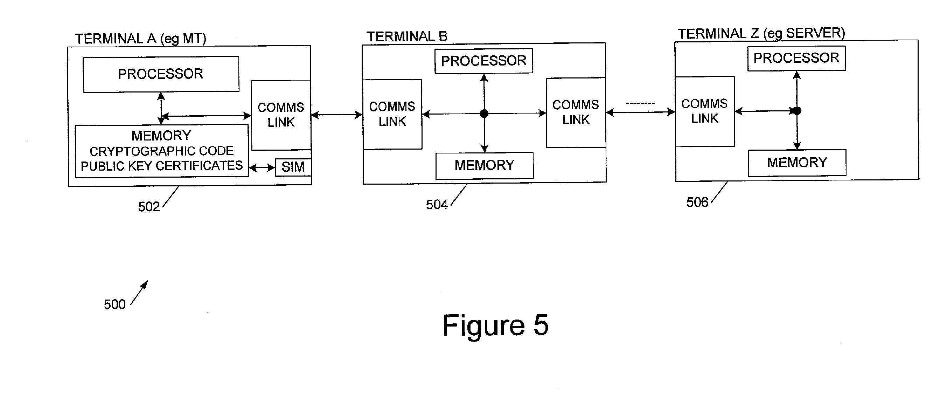

Figure 5 shows a chain 500 of terminals suitable for implementing embodiments of the protocol. Here "terminal" is here used in a broad sense to indicate a data processing system with some communication capability and may include (but is not limited to) Pocket PCs, mobile phones and other mobile communications devices, PDAs (personal digital assistants) and palm-, lap- and desktop computers.

The chain begins with a mobile terminal A 502, which is in communication with a second terminal B 504 ultimately, in the illustrated example, the chain ending in a terminal Z 506 such as a server. Each terminal comprises a processor coupled to memory, the memory storing cryptographic code such as symmetric and/or asymmetric encryption and decryption code, and public key certificates (or, in other embodiments, shared symmetric keys). Each processor is also coupled to one or more communications links to implement wireless (or wired) communication links with the terminal or terminals to either side in the chain. Terminal A 502 in the illustrated example comprises a mobile terminal with a SIM card, which may also store, for example, digital certificate data.

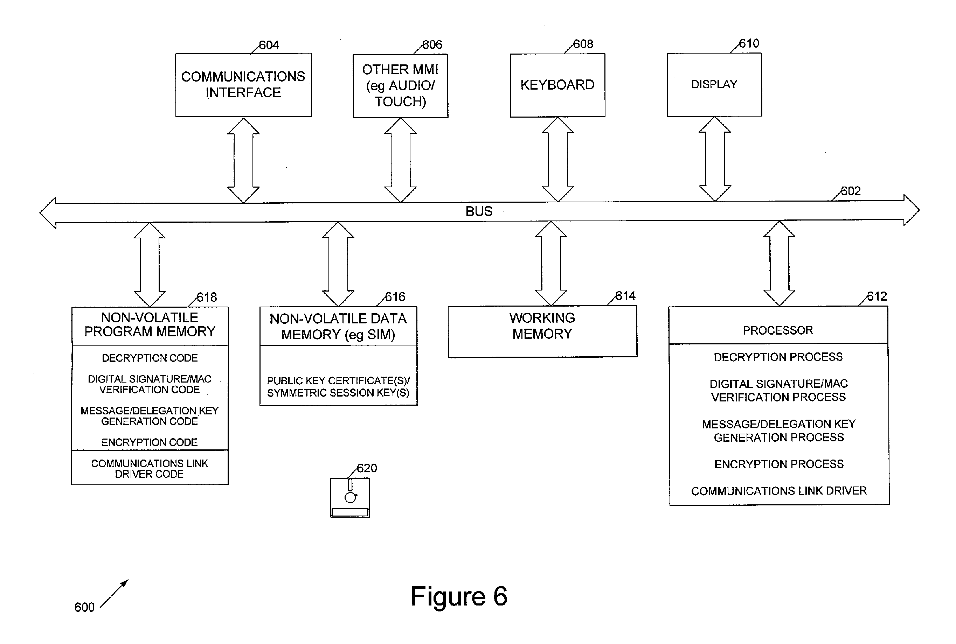

Figure 6 shows a general-purpose computer system 600 suitable for use as one of the terminals of the chain. The computer system 600 comprises an address and databus 602 to which is coupled a keyboard 608, display 610 and a man-machine interface (MMI) 606 such as an audio and/or tough screen interface. In some embodiments a cryptographic processing system, that is memory and a (possibly dedicated) processor may be provided on a removeable card such as a SIM card. Figure 6 may thus represent such a system, although the MMI will then generally be absent. Also coupled to bus 602 is a communications interface 604 such as a network interface (for a server), a radio or infrared interface (for a phone or PDA) or a contact pad interface (for a SIM card). Further coupled to bus 602 are a processor 612, working memory 614, non-volatile data memory 616, and non-volatile programme memory 618, the non-volatile memory typically comprising Flash memory.

The non-volatile programme memory 618 stores cryptography code, that is encryption and decryption code, digital signature/MAC verification code, message and delegation key generation code, and driver code for the communications interface. Processor 612 implements this code to provide corresponding processes to implement methods according to embodiments of the invention. The non-volatile data memory 616 stores a public key, preferably within a digital certificate (where asymmetric cryptography is employed) and/or symmetric session keys certificate (where symmetric cryptography is employed).

The working memory can be used to store one or more delegation tokens including delegation keys, and software received or downloaded for passing on to another terminal (at the end of the chain this software may be stored in non-volatile memory, eg in a SDR). The software may comprise computer program code and/or data such as video or MP3 data.

Reference has been made to mobile terminals and servers of mobile communications systems and wired and wireless computer networks but applications of embodiments of the protocol aspects are not limited to such environments. The protocols described herein also have applications in cellular networks, public and private wired and wireless networks, trusted and untrusted PANs and in providing e- and m-commerce services and Internet and other services. Broadly speaking embodiments of the delegation protocols described herein may be employed in any system comprising two or more entities and having a means of communicating between them. Generally speaking any terminal or server or a program code object may initiate delegation and any terminal or server or a program code object may form the end point of a chain.

No doubt many effective alternatives will occur to the skilled person and it will be understood that the invention is not limited to the described embodiments but encompasses modifications apparent to those skilled in the art within the spirit and scope of the claims.

**Claims**

1. A method of delegation from a first data processing entity to a second data processing entity, said first and second entities having a bidirectional communication link with one another, the method comprising:

   sending a delegation token from said first entity to said second entity, said delegation token including information relating to a delegation request;
   receiving a reply from said second entity at said first entity, said reply including information for determining acceptance of delegation represented by said delegation token by said second entity; and
   sending a signature from said first entity to said second entity responsive to said reply, said signature comprising a signature of at least said delegation token.

2. A method as claimed in claim 1 wherein said reply includes a delegation verification key, and wherein said signature comprises a signature of said delegation token and said delegation verification key.

3. A method as claimed in claim 1 or 2 wherein said reply includes a signature of said second entity, the method further comprising verifying said second entity signature prior to responding to said reply.

4. A method as claimed in claim 3 wherein said second entity signature comprises a signature of at least said delegation token.

5. A method as claimed in claim 4 when dependent upon claim 2 wherein said delegation verification key comprises one key of a pair of keys, the other key of which comprises a delegation signing key, and wherein said reply includes a signature of said delegation verification key generated with said delegation signing key.

6. A method as claimed in any preceding claim wherein said sending of said delegation token from said first to said second entity further comprises sending a first entity signature of at least said delegation token.

7. A method as claimed in any preceding claim wherein one or both of said delegation token sending and said delegation token signature sending include sending timestamp and/or nonce data for validation by said second entity.

8. A method as claimed in any preceding claim wherein said receiving includes receiving timestamp and/or nonce data from said second entity, the method further comprising validating said received timestamp and/or nonce data, and wherein said delegation token signature sending is responsive to said validating.

9. A method of flexible delegation comprising:

   implementing the method of claim 1;
   determining a desired level of security; and
   selecting optional additional information to be included in said sending and receiving responsive to said determining.

**10.** A method as claimed in claim 9 wherein said additional information is selected from information required by any one of claims 1 to 8.

**11.** A method of flexible delegation as claimed in claim 9 wherein said selecting of said optional additional information comprises selecting;

optional additional information for sending with said delegation token comprising a PKI signature of said first entity; and/or optional additional information for receiving with said reply comprising one or more of: a delegation verification key comprising one of a pair of keys held by said second entity, a PKI signature of said second entity, and data signed by the other of said pair of keys.

**12.** A method of secure cascaded delegation, the method including implementing the method of any one of claims 1 to 8 to delegate from said first to said second entity, the method further comprising delegating from said second entity to a third data processing entity by:

sending a second delegation token from said second to said third entity;
receiving a reply from said third entity at said second entity, said reply including information for determining acceptance of delegation represented by said delegation token by said third utility; and
sending from said second entity to said third entity, responsive to said reply from said third entity, a second entity delegation token signature comprising a signature of said second delegation token by said second entity, said delegation token from said first entity, and said signature of said delegation token from said first entity.

**13.** A method as claimed in claim 12 when dependent upon claim 2 further comprising sending from said second entity to said third entity, responsive to said reply from said third entity, said second entity delegation verification key.

**14.** A method as claimed in claim 13 further comprising sending from said second entity to said third entity, responsive to said reply from said third entity, a signature for said second entity delegation token signature verifiable using said second entity delegation verification key.

**15.** A method as claimed in any one of claims 12 to 14 extended to delegate to a fourth or further data processing entity.

**16.** A method of secure multicast delegation comprising implementing a method as claimed in any preceding claim for delegation from said first entity to a plurality of said second entities each in bi-directional communication with said first entity, and wherein said sending and receiving is implemented between said first entity and each of said second entities.

**17.** A method of confirming acceptance of delegation from a first data processing entity to a second data processing entity, said first and second entities having a bi-directional communication link with one another, the method comprising:

receiving a delegation token from said first entity, said delegation token including information relating to a delegation request;
generating a reply for said first entity, said reply including at least a delegation verification key comprising one key of a pair of keys, the other key of which comprises a delegation signing key, said delegation signing key being a key usable to generate a signature for a message from said second entity, said delegation verification key being usable to verify said signature; and
sending said reply to said first entity to confirm acceptance of said delegation.

**18.** A method as claimed in claim 17 wherein said reply includes a signature of said delegation verification key generated with said delegation signing key.

**19.** A method as claimed in claim 17 or 18 wherein said reply includes a signature of said delegation token by said second entity.

**20.** A method of requesting a service, by a delegate data processing entity in a chain of delegate data processing entities of length at least one, from an end point data processing entity, the method comprising sending a request from said delegate entity to said end point entity, said request comprising:

a set of delegation tokens, one from each delegate entity in said chain, each said delegation token including information relating to a delegation request;

a set of delegation token signatures, one from each delegate entity in said chain, each comprising a respective delegate entity signature of a respective said delegation token; and

service request data.

21. A method as claimed in claim 20, said request further comprising a public key infrastructure (PKI) signature of at least said service request data, the method further comprising signing said service request data with a private key of a PKI key pair of said delegate entity sending said request data to said end point entity.

22. A method as claimed in claim 20 or 21, wherein each said delegation token signature comprises a signature of both a said delegation token and an associated delegation token verification key, said request further comprising a set of said delegation verification keys, one from each delegate entity in said chain.

23. A method as claimed in claim 22 wherein a said delegation verification key comprises one key of a pair of keys, the other key comprising a delegation signing key, and wherein said request further comprises a signature of at least said service request data generated using a delegation signing key associated with said delegate utility sending said request data to said end point, the method further comprising signing said service request data using said delegation signing key.

24. A method of delegating from a first data processing entity to a second data processing entity using a delegation protocol, said delegation protocol including sending a signed delegation token from said first to said second entity, said signed delegation token comprising a signature of a delegation token and of a key received from said second entity by said first entity.

25. A method of delegating from a first data processing entity to a second delegation protocol entity, the method comprising:

   sending a message from said first to said second entity, the message including at least:

      a delegation token;
      a signature of a combination of said delegation token and a secret key; and
      an encrypted version of said secret key.

26. A method as claimed in claim 25 wherein said signature allows recovery of a message which was signed, and wherein said delegation token and said encrypted secret key are provided within said signature.

27. A method as claimed in claim 25 or 26 wherein said secret key comprises a private key for an asymmetric cryptographic algorithm.

28. A method as claimed in claim 27 wherein said message includes a key pair for an asymmetric cryptographic algorithm, said key pair including said secret key.

29. A method as claimed in claim 25 or 26 wherein said secret key comprises a shared secret key for a symmetric cryptographic algorithm.

30. A method as claimed in claim 29 further comprising generating said secret key prior to said sending.

31. A method as claimed in claim 25 wherein said secret key comprises a shared secret key for a symmetric cryptographic algorithm, and wherein said encrypted version of said secret key is encrypted using a public key of said second entity.

32. A method as claimed in any one of claims 24 to 31 further comprising:

   determining at least one security parameter for said delegating; and
   increasing the security of said sending in response to a result of said determining.

33. A method as claimed in claim 32 wherein said at least one security parameter includes a parameter indicating a level of security of a communications medium employed for sending said message.

**34.** A method as claimed in claim 32 or 33 wherein said at least one security parameter includes a parameter indicating a level of trustworthiness of said second entity.

**35.** A method as claimed in claim 32, 33 or 34 wherein said determining is performed automatically.

**36.** Processor control code to, when running, implement a method according to any preceding claim.

**37.** A carrier carrying the code of claim 36.

**38.** A data processing entity configured to implement a method as claimed in any one of claims 1 to 11 and 17 to 35.

**39.** A data processing system configured to implement the method of any one of claims 12 to 16.

**40.** Data processing apparatus configured for delegation to a second data processor, the apparatus comprising:

a data memory operable to store data to be processed;
an instruction memory storing processor implementable instructions; and
a processor coupled to the data memory and to the instruction memory and operable to process data in accordance with the instructions, the instructions comprising instructions for controlling the processor to:

send a delegation token to said second processor, said delegation token including information relating to a delegation request;
receive a reply from said second processor, said reply including information for determining acceptance of delegation represented by said delegation token by said second processor; and
send a signature to said second processor responsive to said reply, said signature comprising a signature of at least said delegation token.

**41.** Data processing apparatus configured for accepting delegation from a delegating data processor, the apparatus comprising:

a data memory operable to store data to be processed;
an instruction memory storing processor implementable instructions; and
a processor coupled to the data memory and to the instruction memory and operable to process data in accordance with the instructions, the instructions comprising instructions for controlling the processor to:

receive a delegation token from said delegating processor, said delegation token including information relating to a delegation request;
generate a reply for said delegating processor, said reply including at least a delegation verification key comprising one key of a pair of keys, the other key of which comprises a delegation signing key, said delegation signing key being a key usable to generate a signature for a message from the data processing apparatus, said delegation verification key being usable to verify said signature; and
send said reply to said delegating processor to confirm acceptance of said delegation.

**42.** A data processor configured to request a service from an end point data processor when in a chain of delegate data processors, the chain having a length of at least one, the data processor comprising:

a data memory operable to store data to be processed;
an instruction memory storing processor implementable instructions; and
a processor coupled to the data memory and to the instruction memory and operable to process data in accordance with the instructions, the instructions comprising instructions for controlling the processor to send a request to said end point processor, said request comprising:

a set of delegation tokens, one from each delegate processor in said chain, each said delegation token including information relating to a delegation request;
a set of delegation token signatures, one from each delegate processor in said chain, each comprising a respective delegate entity signature of a respective said delegation token; and

service request data.

Figure 1a

EP 1 411 430 A2

Figure 1b

Figure 2

MMI

304 — CONTROL

AIR

| ANTENNA HARDWARE FIRMWARE OPERATING SYSTEM COMMON SOFTWARE | RF HARDWARE FIRMWARE OPERATING SYSTEM COMMON SOFTWARE | MODEM HARDWARE FIRMWARE OPERATING SYSTEM COMMON SOFTWARE | LINK PROCESSOR HARDWARE FIRMWARE OPERATING SYSTEM COMMON SOFTWARE | INFOSEC HARDWARE FIRMWARE OPERATING SYSTEM COMMON SOFTWARE | MESSAGE PROCESSING & ID HARDWARE FIRMWARE OPERATING SYSTEM COMMON SOFTWARE | USER IO HARDWARE COMMON SOFTWARE |
|---|---|---|---|---|---|---|

302a    302b    302c    302d    302e    302f    302g

VOICE/DATA/
MULTIMEDIA/
CONTROL
NETWORK

300

Figure
3

EP 1 411 430 A2

SECURE LINK (C1)                    INSECURE LINK (C2)

$A_1 \rightarrow A_2$

S400
┌─────────────────┐
│       DT1       │
└─────────────────┘

S402
┌─────────────────┐
│       DT1       │
│      SK1()      │
└─────────────────┘

MODE B
C1, T3

MODE D
C2, T3

MODE A
C1, T1/2

MODE C
C2, T1/2

$A_2 \rightarrow A_1$

S404
┌─────────────────┐
│      DVK2       │
└─────────────────┘

S406
┌─────────────────┐
│      DVK2       │
│      SK2()      │
│      DSK2()     │
└─────────────────┘

S408
┌─────────────────┐
│      DVK2       │
│      SK2()      │
└─────────────────┘

$A_1 \rightarrow A_2$

S410
┌─────────────────────────┐
│          SDT1           │
│   (=SK1(DT1, DVK2))     │
└─────────────────────────┘

$A_2 \rightarrow A_3$

S412
┌─────────────────────────┐
│  SDT1, SDT2, DSK2(SDT2) │
│        DT1, DVK2        │
└─────────────────────────┘

$A_f(A_2) \rightarrow B$

S414
┌─────────────────────────┐
│  SDT1, SRV, DSK2(SRV)   │
│        DT1, DVK2        │
│         SK2()           │
└─────────────────────────┘

Figure 4a

SWITCH ON MT

S452
INITIALISE
MOBILE
AGENT

S450
INITIALISE
DELEGATION
OPERATING
MODE

USER/
MANUFACTURER
CONFIGURATION
DATA

S454
INPUT FROM
USER
INTERFACE

S458
DETERMINE COMMS
SECURITY

S456
CONFIGURATION
DATA FILES

S460
SECURE?

NO

YES

S462
DETERMINE
TRUSTEDNESS OF
DELEGATE

S470
DETERMINE
TRUSTEDNESS OF
DELEGATE

S464
DELEGATE TRUSTED?

NO

YES

S472
DELEGATE TRUSTED?

NO

YES

S466
SELECT
MODE C

S468
SELECT
MODE D

S474
SELECT
MODE B

S476
SELECT
MODE A

Figure 4b

Figure 5

EP 1 411 430 A2

604
**COMMUNICATIONS INTERFACE**

606
**OTHER MMI (eg AUDIO/ TOUCH)**

608
**KEYBOARD**

610
**DISPLAY**

602
**BUS**

618
**NON-VOLATILE PROGRAM MEMORY**

DECRYPTION CODE

DIGITAL SIGNATURE/MAC VERIFICATION CODE

MESSAGE/DELEGATION KEY GENERATION CODE

ENCRYPTION CODE

COMMUNICATIONS LINK DRIVER CODE

616
**NON-VOLATILE DATA MEMORY (eg SIM)**

PUBLIC KEY CERTIFICATE(S)/ SYMMETRIC SESSION KEY(S)

614
**WORKING MEMORY**

612
**PROCESSOR**

DECRYPTION PROCESS

DIGITAL SIGNATURE/MAC VERIFICATION PROCESS

MESSAGE/DELEGATION KEY GENERATION PROCESS

ENCRYPTION PROCESS

COMMUNICATIONS LINK DRIVER

620

600

# Figure 6